Europäisches Patentamt

European Patent Office

Office européen des brevets

(11) Numéro de publication: **0 486 094 A1**

## DEMANDE DE BREVET EUROPEEN

(21) Numéro de dépôt: **91202875.0**

(22) Date de dépôt: **05.11.91**

(51) Int. Cl.5: **H04B 7/08**, H04L 1/06

(30) Priorité: **13.11.90 FR 9014037**

(43) Date de publication de la demande:
**20.05.92 Bulletin 92/21**

(84) Etats contractants désignés:
**DE FR GB IT**

(71) Demandeur: **T.R.T. TELECOMMUNICATIONS RADIOELECTRIOUES ET TELEPHONIOUES 88, rue Brillat Savarin F-75013 Paris(FR)**
(84) **FR**

(71) Demandeur: **N.V. Philips' Gloeilampenfabrieken Groenewoudseweg 1 NL-5621 BA Eindhoven(NL)**
(84) **DE GB IT**

(72) Inventeur: **Laffont, Jean Société Civile S.P.I.D., 156, Boulevard Haussmann F-75008 Paris(FR)**

(74) Mandataire: **Chaffraix, Jean et al Société Civile S.P.I.D. 156, Boulevard Haussmann F-75008 Paris(FR)**

(54) Dispositif de réception formé d'une pluralité de branches de réception.

(57) Ce dispositif est formé de deux branches de réception (1) et (4) pour recevoir une onde dont le spectre en fréquence est pratiquement constant dans une bande de fréquence déterminée, d'un circuit combineur (15) pour combiner les ondes à la sortie des branches de réception et d'un asservissement pour maintenir constant le spectre du signal à la sortie du circuit combineur en agissant sur un circuit déphaseur (12) inséré dans ladite branche 4. L'asservissement est constitué par un circuit discriminateur de fréquence (25) pour analyser les ondes combinées, par un circuit sélectif (27) réglable pour prélever une bande de fréquence du spectre du signal combiné en fonction du signal de sortie du discriminateur de fréquence et par un circuit de commande (29, 31) qui agit sur le circuit déphaseur pour rendre maximal le signal de sortie du circuit sélectif.

Application : faisceaux hertziens.

FIG.1

La présente invention concerne un dispositif de réception formé d'au moins deux branches de réception pour recevoir une onde dont le spectre en fréquence est pratiquement constant dans une bande de fréquence déterminée, d'un circuit combineur pour combiner les ondes à la sortie des branches de réception et d'un asservissement pour maintenir constant le spectre du signal à la sortie du circuit combineur en agissant sur un circuit déphaseur inséré dans l'une desdites branches.

Une telle invention trouve d'importantes applications dans les systèmes de réception à diversité d'espace notamment pour faisceaux hertziens. Dans ce domaine, il est apparu comme indispensable de mettre en oeuvre des moyens de lutte contre les effets de distorsion sélective dus à la propagation. L'un d'entre eux consiste à combiner de manière appropriée les signaux reçus d'un même émetteur sur deux antennes différentes, (diversité d'espace). La manière la plus répandue de procéder consiste à effectuer cette opération en fréquence intermédiaire. Les deux signaux en fréquence intermédiaire sont déphasés et atténués ou amplifiés de façon convenable l'un par rapport à l'autre afin que le signal résultant de leur sommation (signal dit combiné) présente des caractéristiques suffisantes pour satisfaire aux conditions de transmission correcte. Il est connu et prouvé que le signal combiné peut et est, dans la plupart des cas, meilleur que les signaux individuels reçus par chacune des branches. Ceci est particulièrement appréciable dans le cas où l'un ou les deux signaux reçus est ou sont affecté(s) de distorsions dues à un phénomène sélectif (en fréquence) de propagation. En effet, il est aisé de montrer et de vérifier que lorsque les antennes de réception sont suffisamment distantes (diversité d'espace) ou orientées selon des incidences différentes (diversité angulaire), les signaux respectivement reçus présentent des distorsions décorrélées dont une combinaison linéaire convenable suffit à restituer un signal beaucoup moins distordu et exploitable.

Il est connu d'agir sur le déphaseur pour augmenter le niveau global (maximalisation de la puissance).

Un critère d'asservissement plus particulier est décrit dans la demande de brevet européen n° 0 128 812. Dans cette demande, le spectre du signal combiné est analysé et l'on agit sur le déphaseur pour égaliser le spectre.

Le dispositif décrit dans la demande de brevet européen présente des inconvénients. L'analyse du signal combiné est faite au moyen d'un oscillateur, accordable sur une multitude de fréquences, qui sélectionne ainsi par l'intermédiaire d'un circuit mélangeur différentes raies du signal combiné. Outre le fait que cet oscillateur engendre des fréquences qui peuvent être néfastes pour le bon fonctionnement du dispositif, on se trouve confronté à un traitement compliqué de ces différentes raies impliquant des mémoires et un microprocesseur.

La présente invention propose un dispositif du genre mentionné dans le préambule présentant une structure bien plus simple que celle du dispositif connu.

Pour cela, un tel dispositif est remarquable en ce que l'asservissement est constitué par un circuit discriminateur de fréquence pour analyser les ondes combinées, par un circuit sélectif réglable pour prélever une bande de fréquence du spectre du signal combiné en fonction du signal de sortie du discriminateur de fréquence et par un circuit de commande qui agit sur le circuit déphaseur pour rendre maximal le signal de sortie du circuit sélectif.

L'invention repose sur les considérations suivantes.

L'asservissement consiste à mettre en oeuvre un dispositif de maximalisation de la puissance mesurée dans une bande du spectre du signal combiné présentant le moins d'énergie. Autrement dit l'on suppose que le spectre idéal présente une enveloppe connue (propriété des transmissions numériques pseudo aléatoires souvent utilisées dans les faisceaux hertziens et que tout écart relativement à cette enveloppe (distorsion) est associé à un point de minimum d'énergie dans la bande. Ce principe apparait donc comme étant celui d'un critère de minimalisation de la distorsion en bande. De fait, il est prouvé et expérimenté que tous les systèmes connus de démodulation de signaux numériques sont d'autant plus sensibles aux distorsions que le rapport signal à bruit global se détériore, ou autrement dit que le critère de minimalisation des distorsions est prépondérant devant celui de la maximalisation de la puissance lorsque des distorsions sont présentes dans la bande utile.

Il est également particulièrement important de signaler que lorsque les distorsions disparaissent (retour aux conditions normales de propagation) le dispositif de l'invention retrouve ipso-facto le comportement d'un système de maximalisation de la puissance quand bien même celle-ci est mesurée dans une bande passante réduite. En effet il peut être facilement prouvé qu'en l'absence de distorsion la maximalisation de la puissance mesurée dans une bande passante réduite conduit aux mêmes conditions que celles obtenues en mesurant la puissance dans une bande passante globalisant le signal.

Ce procédé est donc indissociable de celui permettant d'asservir de manière autoadaptative un filtre de mesure de puissance, constamment centré sur la fréquence particulière du spectre présentant le moins d'énergie comparativement à l'allure nominale dudit spectre idéal. Un avantage apporté par l'invention est qu'il n'est pas fait appel, comme cela existe parfois dans l'état de l'art, à une quelconque notion de seuil faisant basculer l'asservissement d'un critère de maximalisation de puissance à celui de minimisation de distorsion et réciproquement.

La description suivante, accompagnée des dessins ci-annexés, le tout donné à titre d'exemple non limitatif fera bien comprendre comment l'invention peut être réalisée.

La figure 1 montre un dispositif conforme à l'invention.

La figure 2 montre en a le spectre du signal émis et en b le spectre du signal déformé et l'allure de la bande passante du circuit sélectif.

La figure 3 montre un mode de réalisation préféré d'un dispositif conforme à l'invention.

La figure 4 montre la composition vectorielle des signaux présents dans le montage du dispositif de la figure 3.

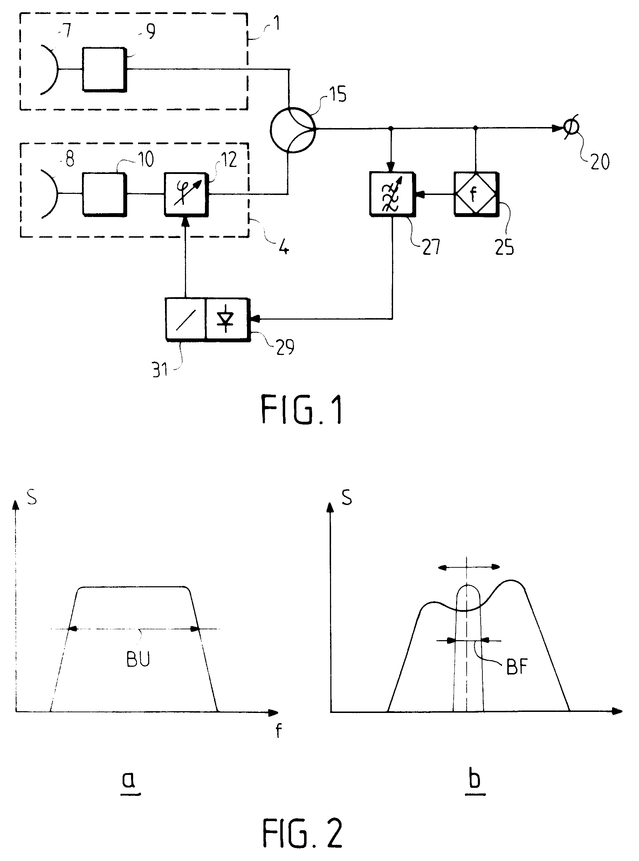

Le dispositif de l'invention montré à la figure 1 comporte deux branches de réception 1 et 4. Chaque branche est pourvue d'une antenne de réception 7, 8 pour recevoir une onde de quelques Gigahertz utilisée pour transmettre des données numériques codées d'une manière pseudo aléatoire et donc, cette onde présente un spectre S plat dans une bande passante donnée BU comme cela est montré à la figure 2a.

A ces antennes sont raccordées respectivement pour chacune de ces branches un récepteur 9 et 10 qui amplifie ces ondes et les transpose à une fréquence intermédiaire. Dans l'une des branches, la branche 4, est inséré un circuit déphaseur 12. Les signaux de sortie de ces branches sont combinés par superposition au moyen, par exemple, d'un circuit hybride 15 qui constitue ainsi un circuit combineur. Les signaux superposés sont alors accessibles à une borne 20 pour un traitement supplémentaire ne faisant pas partie de l'invention.

Conformément à l'invention, pour maintenir plat le spectre des données reçues, on a prévu un asservissement formé d'un discriminateur de fréquence 25 pour analyser le spectre du signal combiné, un filtre sélectif 27 réglable par le signal de sortie du discriminateur pour prélever une partie de largeur BF (voir figure 2b) du spectre du signal combiné. Un circuit de niveau 29, 31 agit sur le circuit déphaseur 12 en fonction du niveau du signal de sortie du filtre 27. Le circuit 29, 31 est formé d'un détecteur d'enveloppe 29 et d'un circuit de commande 31 qui fournit la tension pour commander au déphaseur 12.

Pour la réalisation du circuit déphaseur on pourra se reporter à la figure 10 de l'article de A. RICAGNI et T. TESTI intitulé : "IF COMBINING TECHNIQUES FOR SPACE DIVERSITY IN ANALOG AND DIGITAL RADIO SYSTEM" paru dans IEEE International Conference On Communications 13/17 juin 1982 - PHILADELPHIA pages 4B.6.1. à 4B.6.5.

Le discriminateur peut être un modèle à circuit intégré, par exemple le circuit fabriqué par PLESSEY sous l'immatriculation SL1454.

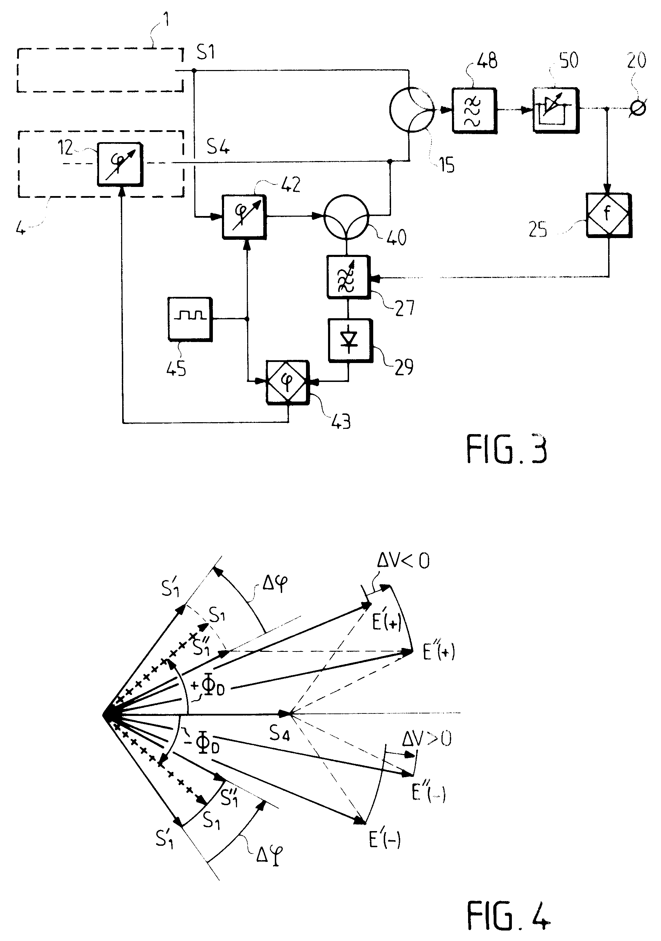

La figure 3 montre un mode de réalisation préféré d'un dispositif conforme à l'invention. Les éléments communs avec ceux de la figure 1 portent les mêmes références.

Le dispositif de la figure 3 comporte, outre les éléments du dispositif de la figure 1, un deuxième circuit combineur 40 pour combiner, d'une part les signaux de sortie de la branche 1 déphasés à basse fréquence et dans une faible mesure par un circuit modulateur de phase 42 et, d'autre part les signaux de sortie de la branche 4.

L'entrée du filtre sélectif 27 est branchée à la sortie de ce circuit 40 et son entrée de commande reçoit le signal du discriminateur 25, toujours connecté au niveau de la borne 20, le détecteur d'enveloppe mesure le niveau du signal de sortie du filtre 27 et son signal de mesure est appliqué à un mesureur de phase 43 recevant un signal de référence d'un oscillateur 45 commandant aussi le déphaseur 42. Le signal de sortie de ce mesureur déphasé est appliqué au déphaseur 12. Des circuits accessoires sont insérés entre la sortie du circuit combineur 15 et la borne 20, un filtre passe-bande 48 et un circuit de régulation d'amplitude 50 afin d'améliorer la qualité du signal.

Le fonctionnement d'un tel dispositif est le suivant. On se reporte à la figure 4.

Soit $\Delta\phi$ l'amplitude de la modulation de phase apportée par le démodulateur de phase 42 et $\Phi_D$ le déphasage du signal de sortie S4 de la branche 4.

Soit $\Delta\phi$ l'amplitude de la modulation apportée par le déphaseur 42. Le signal de sortie S1 de la branche B1 va prendre deux positions S'1 et S''1 si on considère la représentation vectorielle de la figure 4 où la phase de référence est donnée par le signal S4 de sortie de la branche 4.

On envisage deux cas donnés par le déphasage de S1 par rapport à S4.

Premier cas :

le déphasage est positif et égal à $+ \Phi_D$ la composition du signal S4 avec S''1 donne le signal E''(+) et celle du signal avec S'1 donne E'(-). On constate que E''(+)>E'(-) donc que l'amplitude du signal diminue de $\Delta V$.

Deuxième cas :

le déphasage est négatif et égal à $- \Phi_D$ en appliquant les mêmes compositions on obtient les signaux E''(-) et E'(-) et l'on constate que E''(-)<(E'(-) et que $\Delta V$ est positif.

De cela il découle que pour un changement de phase de $\Phi_D$ on a une modulation du signal qui est en opposition de phase, ce qui donne en sortie du circuit 43 un signal dont le signe est apte à contrôler le déphaseur 12.

On peut améliorer le dispositif de l'invention en agissant sur l'amplitude des signaux aux sorties de chaque branche afin de les rendre égales. Ceci peut être fait par un amplificateur à gain variable faisant partie des branches de réception.

**Revendications**

1. Dispositif de réception formé d'au moins deux branches de réception pour recevoir une onde dont le spectre en fréquence est pratiquement constant dans une bande déterminée, d'un premier circuit combineur pour fournir un premier signal combiné en combinant les ondes à la sortie des branches de réception et d'un asservissement qui agit sur un circuit déphaseur inséré dans l'une des branches pour maintenir constant à la sortie dudit dispositif le spectre d'un signal de sortie représentant une combinaison des ondes des deux branches, ledit asservissement étant constitué par un circuit discriminateur de fréquences pour analyser des signaux combinés, par un circuit sélectif réglable pour prélever une bande de fréquence du spectre d'un signal combiné en fonction du signal de sortie dudit discriminateur et par un circuit de commande qui agit sur le circuit déphaseur pour rendre maximal le signal de sortie du circuit sélectif, caractérisé en ce que le circuit de commande comporte un circuit de modulation de phase relié à la sortie de l'une des branches, un deuxième circuit combineur pour combiner les ondes à la sortie de ce circuit de modulation et de l'autre branche, un circuit oscillateur pour agir sur le circuit de modulation, un détecteur d'enveloppe branché à la sortie du circuit sélectif et un circuit détecteur de phase pour agir sur le circuit déphaseur en fonction de la mesure de l'écart de phase des signaux aux sorties du circuit oscillateur et du circuit sélectif.

2. Dispositif de réception selon la revendication 1, caractérisé en ce que le signal de sortie est prélevé à partir dudit premier circuit combineur tandis que le signal d'entrée dudit circuit sélectif est prélevé à partir du deuxième circuit combineur.

3. Dispositif de réception selon la revendication 1 ou 2, caractérisé en ce que le circuit discriminateur de fréquences est du type à un seul accès de sortie.

FIG.1

a

b

FIG. 2

FIG. 3

FIG. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | IEEE INTERNATIONAL CONFERENCE ON COMMUNICATIONS 1987<br>vol. 3, 7 Juin 1987, SEATTLE, US<br>pages 1803 - 1808;<br>H. ICHIKAWA ET AL.: '256QAM Multi-carrier 400Mb/s microwave radio system field tests'<br>* page 1804, colonne de droite *<br>* figure 4 *<br>--- | 1-3 | H04B7/08<br>H04L1/06 |
| A | US-A-4 754 227 (TEAGUE)<br>* colonne 2, ligne 3 - colonne 2, ligne 14 *<br>* colonne 2, ligne 42 - colonne 2, ligne 46 *<br>--- | 1 | |
| D,A | EP-A-0 128 812 (FUJITSU)<br>* page 2, ligne 16 - page 3, ligne 3 *<br>* figure 3 *<br>----- | 1 | |
| | | | **DOMAINES TECHNIQUES RECHERCHES (Int. Cl.5)**<br><br>H04B<br>H04L |

Le présent rapport a été établi pour toutes les revendications

| Lieu de la recherche | Date d'achèvement de la recherche | Examinateur |
|---|---|---|
| LA HAYE | 02 MARS 1992 | PIEPER T. |

EPO FORM 1503 03.82 (P0402)